# EUROPÄISCHE PATENTSCHRIFT

(11) **EP 1 941 065 B1**
(45) Veröffentlichungstag und Bekanntmachung des Hinweises auf die Patenterteilung: **13.01.2010**
(21) Anmeldenummer: 06807170.3
(22) Anmeldetag: 12.10.2006
(51) Int. Cl.: C14C 3/20, C08G 71/04, C08G 63/00

(54) **VERFAHREN ZUR HERSTELLUNG VON LEDER UND DAFÜR GEEIGNETE PRODUKTE**
LEATHER PRODUCTION METHOD AND PRODUCTS SUITED THEREFOR
PROCEDE POUR PRODUIRE DU CUIR ET PRODUITS ADAPTES A CETTE FIN

(30) Priorität: 18.10.2005 DE 102005050193
(43) Veröffentlichungstag der Anmeldung: 09.07.2008
(73) Patentinhaber: BASF SE, 67056 Ludwigshafen (DE)
(72) Erfinder: REESE, Oliver, 49448 Lemförde (DE); HÜFFER, Stephan, 67063 Ludwigshafen (DE); SCHERR, Günter, 67065 Ludwigshafen (DE); ALBERT, Bernhard, 67157 Wachenheim (DE)
(86) Internationale Anmeldenummer: PCT/EP2006/067302
(87) Internationale Veröffentlichungsnummer: WO 2007/045585

(56) Entgegenhaltungen:
- EP-A- 0 264 628
- EP-A- 0 600 417
- DE-A1- 3 933 478
- DE-B- 1 280 240
- US-A- 6 020 499
- US-A1- 2004 254 292
- DATABASE WPI Week 198131 Derwent Publications Ltd., London, GB; AN 1981-55964D XP002413377 & JP 56 071062 A (MATSUMOTO YUSHI SEIYAKU KK) 13. Juni 1981 (1981-06-13)

## Beschreibung

Die vorliegende Erfindung betrifft ein Verfahren zur Herstellung von Leder unter Verwendung von Produkten, erhältlich durch Umsetzung von
(A) mindestens einen cyclischen organischen Carbonat mit
(B) mindestens einer Verbindung mit mindestens zwei nucleophilen Gruppen pro Molekül, gewählt aus Sulfonsäure-, Hydroxyl-, primären oder sekundären Amino- oder Mercaptogruppen.

Zahlreiche handelsübliche Harzgerbstoffe sind Kondensationsprodukte aus einem oder mehreren Aldehyden wie beispielsweise Formaldehyd und einer oder mehreren Stickstoffverbindungen wie beilspielsweise Melamin. Derartige Harzgerbstoffe, wie beispielsweise in EP 0 264 628 offenbart, liefern zwar in vielen Fällen Leder mit einer guten Fülle, Weichheit und Intensität der Färbung sind aber im allgemeinen nicht gut genug. Außerdem sondern derartige Leder im Allgemeinen Aldehyd, in den meisten Beispielen Formaldehyd ab, was aus toxikologischen Gründen unerwünscht ist.

US 3,265,668-offenbart die wasserfreie Herstellung von Produkten aus Ethylencarbonat und Melamin und ihren Einsatz zur Herstellung von Polyesterharzen für Beschichtungen und Spritzgussteile sowie als Polyhydroxycomponente zur Herstellung von Polyurethanschaumstoffen.

US 4,521,626 offenbart die wasserfreie Herstellung von 5-Methyl-2-oxazolidinon aus Propylencarbonat und Harnstoff.

Es bestand also die Aufgabe, ein Verfahren zur Herstellung von Leder bereit zu stellen, das die vorstehen genannten Nachteile vermeidet und Leder mit guter Fülle, Weichheit und Intensität der Färbung und weiteren guten Gebrauchseigenschaften liefert.

Demgemäß wurde das eingangs definierte Verfahren gefunden.

Zur Ausübung des eingangs definierten Verfahrens geht man aus von nach konventionellen Methoden vorbehandelten Häuten von Tieren wie beispielsweise Rindern, Schweinen, Ziegen oder Hirschen, den sogenannten Blößen. Dabei ist es für das erfindungsgemäße Verfahren nicht wesentlich, ob die Tiere beispielsweise durch Schlachten getötet wurden oder aber an natürlichen Ursachen verendet sind. Zu den konventionellen Methoden der Vorbehandlung gehören das beispielsweise das Äschern, Entkälken, Beizen und Pickeln sowie mechanische Arbeitsschritte, beispielsweise die Entfleischung der Häute.

Zur Ausübung des erfindungsgemäßen Verfahrens verwendet man ein oder mehrere Produkte, erhältlich durch Umsetzung von
(A) mindestens einem cyclischen organischen Carbonat mit
(B) mindestens einer Verbindung mit mindestens zwei nucleophilen Gruppen pro Molekül, gewählt aus Sulfonsäure-, Hydroxyl-, primären oder sekundären Amino- oder Mercaptogruppen.

Unter cyclischen organischen Carbonaten (A) versteht man im Rahmen der vorliegenden Erfindung organische Kohlensäureester, die mindestens eine cyclische Gruppe aufweisen. Bevorzugt handelt es sich bei cyclischen organischen Carbonaten um solche organischen Kohlensäureester, bei denen die Kohlensäureestergruppe Bestandteil eines cyclischen Systems ist.

In einer Ausführungsform der vorliegenden Erfindung wählt man cyclisches organisches Carbonat (A) aus Verbindungen der allgemeinen Formel I 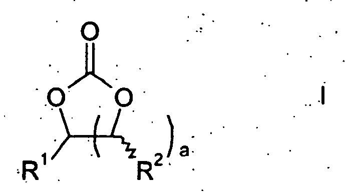 wobei die Variablen wie folgt definiert sind:
- R¹: gewählt aus C₁-C₄-Alkyl, verzweigt oder vorzugsweise linear, beispielsweise Methyl, Ethyl, n-Propyl, iso-Propyl, n-Butyl, iso-Butyl, sec-Butyl, tert.-Butyl; ganz bevorzugt Methyl und Ethyl, und ganz besonders bevorzugt Wasserstoff,
- R²: gegebenenfalls verschieden oder vorzugsweise gleich und unabhängig voneinander gewählt aus Wasserstoff und C₁-C₄-Alkyl, verzweigt oder vorzugsweise linear, beispielsweise Methyl, Ethyl, n-Propyl, iso-Propyl, n-Butyl, iso-Butyl, sec-Butyl, tert.-Butyl, ganz bevorzugt Methyl und Ethyl, und ganz besonders bevorzug jeweils gleich und Wasserstoff,
- a: eine ganze Zahl im Bereich von 1 bis 3, bevorzugt 2 und besonders bevorzugt 1.

Besonders bevorzugte cyclische organische Carbonate (A) sind Propylencarbonat, Ethylencarbonat und Mischungen von Propylencarbonat (R¹ = Methyl, R² = Wasserstoff, a = 1) und Ethylencarbonat (R¹ = R² = Wasserstoff, a = 1), insbesondere bei Zimmertemperatur flüssige Mischungen von Propylencarbonat und Ethylencarbonat.

Unter Verbindungen (B) mit mindestens zwei nucleophilen Gruppen pro Molekül, gewählt aus Sulfonsäure-, Hydroxyl-, Mercapto- und primären oder sekundären Aminogruppen, im Rahmen der vorliegenden Erfindung auch kurz als Verbindungen (B) bezeichnet, werden solche Verbindungen verstanden, die zwei zu nuceophilen Reaktionen befähigte Gruppen wie beispielsweise Sulfonsäuregruppen, Hydroxylgruppen, Mercaptogruppen oder primäre oder sekundäre Aminogruppen aufweise. Beispiele für geeignete Verbindungen (9) können aufweisen:
mindestens zwei nucleophile Hydroxylgruppen pro Molekül,
mindestens zwei nucleophile Mercaptogruppen pro molekül,
mindestens zwei nucleophile primäre oder sekundäre Aminogruppen pro Molekül, beispielsweise zwei oder drei nucleophile primäre oder sekundäre Aminogruppen pro Molekül,
mindestens eine nucleophile Hydroxylgruppe oder Mercaptogruppe und mindestens eine nucleophile primäre oder sekundäre Aminogruppe pro Molekül oder
mindestens eine nucleophile Hydroxylgruppe und mindestens eine nucleophile Mercaptogruppe pro Molekül,
mindestens eine nucleophile Hydroxylgruppe oder primäre oder sekundäre Aminogruppe und eine Sulfonsäuregruppe pro Molekül.

Schwefelsäure ist keine Verbindung (B) im Sinne der vorliegenden Erfindung.

Beispiele für nucleophile Hydroxylgruppen sind OH-Gruppenvon primären und sekundären Alkoholen und insbesondere phenolische OH-Gruppen.
Beispiele für nucleophile Mercaptogruppen sind SH-Gruppen, aliphatisch oder aromatisch.
Beispiele für nucleophile Aminogruppen sind -NHR³-Gruppen, aliphatisch oder aromatisch, wobei R³ gewählt wird aus Wasserstoff, C₁-C₄-Alkyl, wie vorstehend definiert, und CN, oder die NH₂-Gruppe von beispielsweise Amidosulfonsäure.

OH-Gruppen und NH-Gruppen, die Bestandteile von Aminalgruppen, Halbaminalgruppen oder Hydratgruppen von Ketonen oder Aldehyden sind, sind keine nucleophilen Hydroxylgruppen bzw. Aminogruppen im Sinne der vorliegenden Erfindung. Auch OH-Gruppen und NH-Gruppen, die, Bestandteile von Carbonsäuregruppen oder Carbonsäureamidgruppen sind, sind keine nucleophilen Hydroxylgruppen bzw. Aminogruppen im Sinne der vorliegenden Erfindung.

### Bevorzugte Beispiele für Verbindungen (B) sind

Harnstoffe, unsubstituiert oder ein- oder zweifach N,N'-substituiert mit C₁-C₄-Alkyl, Biuret, insbesondere unsubstituierter Harnstoff (B1),
heterocyclische Verbindunge mit mindestens zwei NH₂-Gruppen pro Molekül (B2), beispielsweise Adenin und insbesondere Melamin,
Benzoguanamin,
Dicyandiamid (B3), Guanidin (B4),

Verbindunge der allgemeinen Formel II 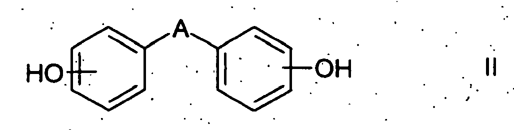 in denen A eine bivalente Gruppe bedeutet, beispielsweise =CH₂, -CH₂CH₂-, -CH(CH₃)-, -C(CH₃)₂-, -CO-, -SO₂, bevorzugt 4,4'-Dihydroxybiphenyl, 2,4'-Dihydroxydiphenylsulfon, besonders bevorzugt 4,4'-Dihydroxydiphenylsulfon (B5), Mischungen von 4,4'-Dihydroxydiphenylsulfon und 2,4'-Dihydroxydiphenylsulfon, beispielsweise in einem Gewichtsverhältnis von 8 : 1 bis 8 : 1,5, sowie Bisphenol A (B6). Weitere bevorzugte Beispiele für Verbindung (B) sind 4-Hydroxyphenylsulfonsäure (B7) und Amidosuifonsäure (B8).

In einer Ausführungsform der vorliegenden Erfindung setzt man cyclisches organisches Carbonat (A) mit Verbindung (B) in einem Molverhältnis im Bereich von 2 : 1 bis 100 : 1, bevorzugt 5 : 1 bis 20 : 1 um.

In einer Ausführungsform der vorliegenden Erfindung setzt man cyclisches organische. Carbonat (A) mit Verbindung (B) in Gegenwart von Base um. Als Base sind beispielsweise basische Erdalkali- oder Alkalimetallsalze geeignet, z. B. Hydroxide und Carbonate von Natrium oder Kalium, weiterhin Amine, insbesondere tertiäre Amine wie beispielsweise Pyridin, Tri-C₁-C₄-Alkylamin wie beispielsweise Trimethylamin, Triethylamin, Isopropyldiethylamin und bicyclische Amine wie beispielsweise 1,4-Diaza-bicyclo[2,2,2]oktan. Man kann beispielsweise katalytische Mengen an Base einsetzen, z. B. 0,001 bis 10 mol-% Base, bezogen auf Verbindung (B).

In einer Ausführungsform der vorliegenden Erfindung setzt man cyclisches organisches Carbonat (A) mit Verbindung (B) bei Temperaturen im Bereich von 150° bis zum Siedepunkt von cyclischem organischen Carbonat (A) oder Verbindung (B) um, je nachdem, was leichter flüchtig ist, bevorzugt mindestens 165°C.

Man kann cyclisches organisches Carbonat (A) mit Verbindung (B) bei beliebigem Druck umsetzen, beispielsweise 0,1 bar bis 10 bar. Bevorzugt setzt man cyclisches organisches Carbonat (A) mit Verbindung (B) bei Normaldruck um.

In einer Ausführungsform der vorliegenden Erfindung setzt man cyclisches organisches Carbonat (A) mit Verbindung (B) über einen Zeitraum von 5 Minuten bis 24 Stunden um. Man beobachtet bei der Umsetzung von cyclischem organischem Carbonat (A) mit Verbindung (B) im Allgemeinen eine Gasentwicklung in Form beispielsweise eines Schäumens oder Sprudelns. In einer Ausführungsform der vorliegenden Erfindung bricht man die Umsetzung von cyclischem organischem Carbonat (A) mit Verbindung (B) ab, wenn keine Gasentwicklung mehr zu beobachten ist.

In einer Ausführungsform der vorliegenden Ereindung kann man nach beendeter Umsetzung neutralisieren, beispielsweise mit Mineralsäure wie z. B. Schwefelsäure. Geeignete pH-Werte für die Neutralisation können im Bereich von 4,5 bis 7 liegen.

In einer Ausführungsform der vorliegenden Erfindung kann man Produkt, erhalten durch Umsetzung von cyclischem organischem Carbonat (A) mit Verbindung (B), nach erfolgter Umsetzung und gegebenenfalls Neutralisation äufreinigen, beispielsweise kann man durch Extraktion oder Ultrafiltration anorganische Salze abtrennen.

In einer Ausführungsform der vorliegende Erfindung führt man die Umsetzung von cyclischem organischem Carbonat (A) mit Verbindung (B) in Gegenwart von mindestens einem Phenol, unsubstituiert oder ein oder mehrfach substituiert mit -SO₃H, durch.

In einer Ausführungsform der vorliegenden Erfindung verzichtet man auf die Aufreinigung von Produkt, erhalten durch Umsetzung von cyclischem organischem Carbonat (A) mit Verbindung (B) und gegebenenfalls Neutralisation.

In einer Ausführungsform der vorliegenden Erfindung kann man Produkt, erhalten durch Umsetzung von cyclischem organischem Carbonat (A) mit Verbindung (B) und gegebenenfalls Neutralisation, trocknen, beispielsweise durch Eindampfen und bevorzugt durch Sprühtrocknen. Man erhält dann ein Pulver:

Zur Durchführung des erfindungsgemäßen Verfahrens kann man Produkt, erhalten durch Umsetzung von cyclischem organischem Carbonat (A) mit Verbindung (B) und gegebenenfalls Neutralisation, als wässrige Formulierung einsetzen. In einer anderen Ausführungsform der vorliegenden Erfindung setzt man Produkt, erhalten durch Umsetzung von cyclischem organischem Carbonat (A) mit Verbindung (B) und gegebenenfalls Neutralisation, als Pulver ein.

In einer Ausführungsform der vorliegenden Erfindung übt man das erfindungsgemäße Verfahren als Gerbverfahren aus, im Folgenden auch als erfindungsgemäßes Gerbverfahren bezeichnet, bevorzugt als Nachgerbverfahren, im Folgenden auch als erfindungsgemäßes Nachgerbverfahren bezeichnet.

Das erfindungsgemäße Gerbverfahren übt man im Allgemeinen so aus, dass man Produkt, erhalten durch Umsetzung von cyclischem organischem Carbonat (A) mit Verbindung (B), in einer Portion oder in mehreren Portionen unmittelbar vor oder aber während des Gerbungsschrittes zusetzt. Das erfindungsgemäße Gerbverfahren wird vorzugsweise bei einem pH-Wert von 2,5 bis 4 durchgeführt, wobei man häufig beobachtet, dass der pH-Wert während der Durchführung des erfindungsgemäßen Gerbverfahrens um etwa 0,3 bis drei Einheiten ansteigt. Man kann den pH-Wert auch durch Zugabe abstumpfender Mittel um etwa 0,3 bis drei Einheiten erhöhen.

Das erfindungsgemäße Gerbverfahren führt man im Allgemeinen bei Temperaturen von 10 bis 45°, bevorzugt bei 20 bis 30°C durch. Bewährt hat sich eine Dauer von 10 Minuten bis 12 Stunden, bevorzugt sind eine bis drei Stunden. Das erfindungsgemäße Gerbverfahren kann man in beliebigen gerbereiüblichen Gefäßen durchführen, beispielsweise durch Walken in Fässern oder in gedrehten Trommeln.

In einer Ausführungsform der vorliegenden Erfindung setzt man 0,01 bis 10 Gew.-% Produkt, erhalten durch Umsetzung von cyclischem organischem Carbonat (A) mit Verbindung (B), bezogen auf das Falzgewicht ein.

In einer Variante des erfindungsgemäßen Gerbverfahrens setzt man Produkt, erhalten durch Umsetzung von cyclischem organischem Carbonat (A) mit Verbindung (B), zusammen mit einem oder mehrere herkömmlichen Gerbstoffen ein, beispielsweise mit Chromgerbstoffen, mineralischen Gerbstoffen, Syntanen, Polymergerbstoffen oder vegetabilen Gerbstoffen, wie sie beispielsweise beschrieben sind in Ullmann's Encyclopedia of Industrial Chemistry, Band A15, Seite 259 bis 282 und insbesondere Seite 268 ff., 5. Auflage, (1990), Verlag Chemie Weinheim. Das Gewichtsverhältnis Produkt, erhalten durch Umsetzung von cyclischem organischem Carbonat (A) mit Verbindung (B), herkömmlicher Gerbstoff bzw. Summe der herkömmlichen Gerbstoffe beträgt zweckmäßig von 0,01 : 1 bis 100 : 1. In einer vorteilhaften Variante des erfindungsgemäßen Verfahrens setzt man nur wenige ppm der herkömmlichen Gerbmittel oben beschriebenem Produkt, erhalten durch Umsetzung von cyclischem organischem Carbonat (A) mit Verbindung (B), zu.

In einer Variante des erfindungsgemäßen Gerbverfahrens setzt man Produkt, erhalten durch Umsetzung von cyclischem organischem Carbonat (A) mit Verbindung (B), in einer Portion oder in mehrere Portionen vor oder während des Vorgerbens zu, in einer besonderen Variante bereits im Pickel.

Zur Durchführung des erfindungsgemäßen Nachgerbverfahrens geht man aus von konventionell, d.h. beispielsweise mit Chromgerbstoffen, mineralischen Gerbstoffen, Polymergerbstoffen, Aldehyden, Syntanen oder Harzgerbstoffen gegerbten Halbzeugen oder erfindungsgemäß wie oben beschrieben hergestellten Halbzeugen. Zur Durchführung des erfindungsgemäßen Nachgerbung lässt man Produkt, erhalten durch Umsetzung von cyclischem organischem Carbonat (A) mit Verbindung (B), auf Halbzeuge einwirken.

Das erfindungsgemäße Nachgerbverfahren kann man unter ansonsten üblichen Bedingungen durchführen. Man wählt zweckmäßig einen oder mehrere, d.h. 2 bis 6 Einwirkschritte und kann zwischen den Einwirkschritten mit Wasser spülen. Die Temperatur bei den einzelnen Einwirkschritten beträgt jeweils von 5 bis 60°C, bevorzugt 20 bis 45°C. Man setzt zweckmäßig einen oder mehrere weitere, während der Nachgerbung üblicherweise verwendete Mittel ein, beispielsweise Fettlicker, Polymergerbstoffe und Fettungsmittel auf Acrylat- und/oder Methacrylatbasis, Nachgerbstoffe auf Basis von Vegetabilgerbstoffen, Füllstoffe, Lederfarbstoffe oder Emulgatoren.

Ein weiterer Gegenstand der vorliegenden Erfindung sind Leder, hergestellt nach dem erfindungsgemäßen Verfahren. Erfindungsgemäße Leder zeichnen sich durch gute Fülle, Weichheit und Intensität der Färbung und weitere gute Gebrauchseigenschaften aus. Erfindungsgemäße Leder eignen sich beispielsweise zur Herstellung von Schuhen oder Autoinnenteilen wie z. B. Autositzen und insbesondere zur Herstellung von Bekleiduhgsstücken wie beispielsweise Gürteln, Jacken, Mänteln und Hosen, weiterhin beispielsweise zur Herstellung von Möbeln und von Handtaschen.

Ein weiterer Gegenstand der vorliegenden Erfindung sind wässrige Formulierungen, beispielsweise wässrige Lösungen, enthaltend mindestens ein Produkt, das erhältlich ist durch Umsetzung von
(A) mindestens einem cyclischen organischen Carbonat mit
(B) mindestens einer Verbindung mit mindestens zwei nucleophilen Gruppen pro Molekül, gewählt aus gewählt aus Harnstoffen, unsubstituiert oder ein- oder zweifach N,N'- substituiert mit C₁-C₄-Alkyl, Biuret, heterocyclischen Verbindungen mit mindestens zwei NH₂-Gruppen pro Molekühl, Benzoguanamin. Dicyandiamid oder Guanidin,

in einem Molverhältnis im Bereich von 2 : 1 bis 100 : 1, bevorzugt 5 : 1 bis 20 : 1. Erfindungsgemäße wässrige Formulierungen können ein oder mehrere Erdalkalimetall-, Ammonium- oder bevorzugt Alkalimetallsalze, insbesondere Alkalmetallsulfat enthalten.

In einer Ausführungsform der vorliegenden Erfindung haben die Produkte in erfindungsgemäßer wässriger Formulierung ein mittleres Molekulargewicht M_{w} im Bereich von 250 bis 1.000.000 g/mol, bevorzugt 300 bis 100.000 g/mol, besonders bevorzugt 500 bis 10.000 g/mol und ganz besonders bevorzugt bis 5.000 g/mol.

In einer Ausführungsform der vorlegenden Erfindung haben die Produkte in erfindungsgemäßer wässriger Formulierung eine enge Molekulargewichtsverteilung, beispielsweise kann der Quotient M_{w}/Mₙ im Bereich von 1,6 bis 3, bevorzugt bis 2,6 liegen.

Erfindungsgemäße wässrige Formulierungen sind zur Durchführung des erfindunggemäßen Verfahrens besonders gut geeignet. Ein weiterer Gegenstand der vorliebenden Erfindung ist die Verwendung von erfindungsgemäßen wässrige Formulierungen zur Herstellung von Leder, beispielsweise als Gerbmittel oder Nachgerbmittel.

Erfindungsgemäße wässrige Formulierungen können farblos, gelblich oder auch bräunlich sein und einen Feststoffgehalt im Bereich von 1 bis 90 Gew.%, bevorzugt 30 bis 75 Gew.-% aufweisen. Erfindungsgemäße wässrige Formulierungen sind zur Durchführung des erfindungsgemäßen Verfahrens besonders gut geeignet und lassen sich gut dosieren. Ein weiterer Gegenstand der vorliegenden Erfindung ist die Verwendung von erfindungsgemäßer wässriger Formulierung zur Herstellung von Leder, beispielsweise als Gerbmittel oder Nachgerbmittel.

Ein weiterer Gegenstand der vorliegenden Erfindung ist ein Verfahren zur Herstellung von erfindungsgemäßen wässrigen Formulierungen; im Folgenden auch erfindungsgemäßes Herstellverfahren genannt, durch Umsetzung von
(A) mindestens einem cyclischen organischen Carbonat mit
(B) mindestens einer Verbindung mit mindestens zwei nucleophilen Gruppen, pro Molekül, gewählt aus Hydroxyl-, Mercapto- oder primären oder sekundären Aminogruppen,
in einem Molverhältnis im Bereich von 2 : 1 bis 100 : 1, bevorzugt 5 : 1 bis 20 : 1.

Weitere Einzelheiten des erfindungsgemäßen Herstellverfahrens sind vorstehend beschrieben.

Die Erfindung wird durch Arbeitsbeispiele erläutert.

### I. Herstellung von erfindungsgemäßen Produkten und Vergleichsgerbmittein

Der Feststoffgehalt wurde durch Verdampfen der flüchtigen Bestandteile bestimmt.

### I.1. Herstellung von erfindungsgemäßem Produkt P1

Man legte 24,0 g (190 mmol) Melamin, 200 g (2,27 mol) Ethylencarbonat und 1,40 g (17,5 mmol) wässrige Natronlauge (50 Gew.%) in einem Kolben vor und erhitzte unter Rühren auf 170°C: Das so erhaltene Gemisch wurde so lange bei 170°C gerührt, bis keine Gasentwicklung mehr zu beobachten war. Anschließend wurde auf Raumtemperatur abgekühlt, und man gab 102 g Wasser zu. Mit wässriger Schwefelsäure, (50 Gew.-%) wurde ein pH-Wert von 5 eingestellt. Man erhielt ca. 250 g des erfindungsgemäßen Produkts P1. Feststoffgehalt: 48%.

### I.2. Herstellung von erfindungsgemäßem Produkt P2

Man legte 107 g (848 mmol) Melamin, 893 g (10,1 mol) Ethylencarbonat und 0,90 g (6,51 mmol) Kaliumcarbonat in einem Kolben vor und erhitzte unter Rühren auf 170°C. Das so erhaltene Gemisch wurde so lange bei 170°C gerührt, bis keine Gasentwicklung mehr zu beobachten war. Anschließend wurde auf Raumtemperatur abgekühlt, und man gab 292 g Wasser zu. Mit wässriger Schwefelsäure (50 Gew.-%) wurde ein pH-Wert von 5 eingestellt. Man erhielt ca. 1000.g des erfindungsgemäßen Produkts P2. Feststoffgehalt: 59%.

### I.3. Herstellung von erfindungsgemäßem Produkt P3

Man legte 24,0 g (190 mmol) Melamin, 300 g (2,94 mol) Propylencarbonat und 6,30 g (56,2 mmol) DABCO^{®} (1,4-Diazabicyclo[2.2.2]oktan, Air Products and Chemicals Inc.) in einem Kolben vor und erhitzte unter Rühren auf 170°C. Das so erhaltene Gemisch wurde so lange bei 170°C gerührt, bis keine Gasentwicklung mehr zu beobachten war. Anschließend wurden bei ca. 160°C bei vermindertem Druck (700 mbar) niedermolekulare Verunreinigungen abdestilliert. Danach wurde auf Zimmertemperatur abgekühlt. Mit wässriger Schwefelsäure (50 Gew.-%) wurde ein pH-Wert von 5 eingestellt. Man erhielt ca. 153 g des erfindungsgemäßen Produkts P3. Feststoffgehalt: 58%.

### I.4. Herstellung von erfindungsgemäßem Produkt P4

Man legte 62,5 g (250 mmol) 4,4'-Dihydroxydiphenylsulfon, 306 g (3,00 mol) Propylencarbonat und 3,45 g (25,0 mmol). Kaliumcarbonat in einem Kolben vor und erhitzte unter Rühren langsam auf 170°C. Das so erhaltene Gemisch wurde so lange bei 170°C gerührt, bis keine Gasentwicklung mehr zu beobachten war. Anschließend wurde auf Zimmertemperatur abgekühlt und mit wässriger Schwefelsäure (50 Gew.-%) ein pH-Wert von 5 eingestellt. Man erhielt 200 g des erfindungsgemäßen Produkts P4. Feststoffgehalt: 75%.

### I.5. Herstellung von erfindungsgemäßem Produkt P5

Man legte 7,60 g (127 mmol) Harnstoff, 200 g (2,27 mol) Ethylencarbonat und 1,5 g (10,9 mmol) Kaliumcarbonat in einem Kolben vor und erhitzte unter Rühren auf 170°C. Das so erhaltene Gemisch wurde so lange bei 170°C gerührt, bis keine Gaseritwicklung mehr zu beobachten war. Anschließend wurde auf Raumtemperatur abgekühlt, 125 g Wasser zugegeben und mit wässriger Schwefelsäure (50 Gew.-%) ein pH-Wert von 5 eingestellt. Man erhielt 250 g des erfindungsgemäßen Produkts P5. Feststoffgehalt: 47%.

### Gerbmittel für Vergleichsbeispiele

### Herstellung von Vergleichsprodukt V-P6

In einem Kolben legte man 0,5 mol Natriümsulfit als 40 Gew.-% wässrige Lösung vor und fügte 30 g (1 mol) Formaldehyd in Form einer 30 Gew.-% wässrigen Lösung zu. Die so erhältliche Lösung wurde auf 70°C erwärmt und eine Mischung von 0,11 mol, Melamin in 32 ml Wasser zugesetzt. Man erhöhte die Temperatur auf 80°C und rührte zwei Stunden bei 80°C. Danach versetzte man mit einer Lösung von 23 mol Harnstoff in 6,5 ml Wasser und rührte eine weitere Stunde bei 80°C. Anschließend fügte man 0,14 mol NaOH als 50 Gew.-% wässrige Lösung zu und rührte weitere zwei Stunden bei 80°C. Danach kühlte man auf Zimmertemperatur ab und stellte mit Ameisensäure einen pH-Wert von 8 ein. Man erhielt eine klare, kältestabile Lösung von Vergleichsprodukt V-P6 in wasser, Feststoffgehalt 40%

### Herstellung von Vergleichsprodukt V-P7

### Stufe 1:

4 mol auf 60°C erwärmtes Phenol wurden innerhalb von 10 Minuten mit 4 mol Oleum (SO₃-Gehalt: 24 Gew.-%) versetzt. Die entstehende Mischung wurde auf 160°C erwärmt. Man rührte 4 Stunden bei 160°C. und kühlte danach auf 80°C ab. Man rührte 2,5.mol Harnstoff als 68 Gew.-% wässrige Lösung ein und dosierte danach innerhalb von 10 Minuten 4 mol Formaldehyd als 30 Gew.-% wässrige Lösung.

### Stufe 2:

in einem Autoklaven legte man 1 mol technisches Dihydroxydiphenylsulfon (Mischung von 80 Gew.-% 4,4'- Dihydroxydiphenylsulfon, 15 Gew.-% 2,4'-Dihydroxydiphenylsulfon und 5 Gew.-% para-Phenolsulfonsäure) als 60 Gew:-% wässrige Lösung vor und fügte 1,2 mol Formaldehyd als 30 Gew.-% wässrige Lösung und 0,65 mol festes Natriumsulfit zu, Man verschloss den Autoklaven und erwärmte auf 115°C innentemperatur. Die Innentemperatur stieg spontan auf etwa 155°C und der Druck auf 4 bis 5 bar. Man rührte drei Stunden bei 155°C, kühlte auf Zimmertemperatur ab und entspannte auf Normaldruck.

Man stellte eine Mischung von 30 Gewichtsteilen Stufe 1 mit 70 Gewichtsteilen Stufe 2 her. Dazu legte man 300 g von Stufe 1 vor und vermischte mit 700 g Stufe 2. Man rührte über einen Zeitraum von 4 Stunden bei Zimmertemperatur und stellte danach mit Ameisensäure einen pH-Wert von 4,5 ein und verdünnte mit 50 ml Wasser. Man erhielt Vergleichsprodukt V-P7, Feststoffgehalt 42 %.

### Vergleichsprodukt V-P8

Zum vergleich kommt eine wässrige Lösung von mit Natronlauge teilneutralisierter Polyacrylsäure mit einer Molmasse (Mₙ) von 18.000 g/mol, pH-Wert 5, und einem Feststoffgehalt von 40% zum Einsatz

### II. Herstellung von Leder - Verwendung von P1 bis V-P8 als Nachgerbmittel

Angaben in Gew.-% bezeichnen den Wirkstoff und beziehen sich jeweils auf das Falzgewicht, wenn nicht anders angegeben.

100 Gewichtsteile Chrom-gegerbtes Rindleder der Falzstärke 1,8 bis 2,0 mm wurden in einem drehbaren Fass (50 l) mit strömungsbrechenden Einbauten bei 30 °C mit 200 % Wasser 10 Minuten gewalkt. Anschließend wurde das Wasser abgelassen und das Rindleder mit 1 Gew.-% Natriumformiat und 1,5 Gew.-% eines Naphthalinsulfonsäure-Formaldehyd-Kondensationsprodukts, hergestellt nach US 5,186,846, Beispiel "Disper-: giermittel 1",'in 100 % Wasser gewalkt (60 Minuten), wobei eine Neutralisation stattfand. Das so vorbehandelte Rindleder wurde dann im Kernbereich in 8 Streifen zu je ca. 500 g geschnitten.

Die Nachgerbung erfolgt in acht separaten 10-I-Dose-Fässern. Man walkte je einen Streifen des so vorbehandelten Rindleders mit 6 Gew.-% Produkt gemäß Tabelle 1 sowie 100 Gew.-% Wasser bei 40°C und einem pH-Wert von 4,5 über einen Zeitraum von 45 Minuten. Anschließend wurde mit jeweils 1 Gew.-% eines Farbstoffgemischs versetzt; das wie folgt zusammengesetzt war:
70 Gewichtsteile Färbstoff aus EP-B 0 970. 148, Beispiel 2.18,
30 Gewichtsteile Acid Brown 75 (Eisenkomplex), Colour Index 1.7.16.

Nach einer Walkzeit von weiteren 90 Minuten wurde mit Ameisensäure auf einen pH-Wert von 3,8 abgesäuert und nach weiteren 20 Minuten die Flotte abgelassen. Die abgelassenen Flotten wurden hinsichtlich der Auszehrung beurteilt (Tabelle.1).

Man versetzte mit 100 Gew.-% Frischwasser, 4 Gew.-% Fettlicker FL-1 und 1 Gew.-% des vorstehend genannten Farbstoffgemischs. Nach einer Walkzeit von 20 Minuten wurden weitere 2 Gew.-% Fettlicker L-1 dosiert und nochmals 60 Minuten gewalkt. Zuletzt wurde mit ca. 0,4 Gew.-% Ameisensäure ein pH-Wert von 3,5 eingestellt. Nach weiteren 20 Minuten wurde die Flotte abgelassen. Die so erhaltenen erfindungsgemäßenLeder bzw. Vergleichsleder wurden ausgeeckt, auf dem Vakuumtrockner bei 60 °C.10 Minuten getrocknet und anschließend gestollt. Man erhielt die erfindungsge-, mäßen Leder L1 bis L5 und die Vergleichsleder V-L6 bis V-L8.

Die Beurteilung der anwendungstechnischen Eigenschaften der erfindungsgemäßen Leder L1 bis L5 und die Vergleichsleder V-L6 bis V-L8 ist in Tabelle 1 zusammengefasst.

**Tabelle 1:**

| Anwendungstechnische Eigenschaften der erfindungsgemäßen Leder L1 bis L5 und die Vergleichsleder V-L6 bis V-L8 | | | | | | | |
|---|---|---|---|---|---|---|---|
| Nachgerbmittel | Leder | Fülle | Weichheit | Färbung: Egalität | Färbung: Intensität | Festnarbigkeit | Auszehrung |
| P1 | L1 | 3 | 3,5 | 2,5 | 2,5 | 2 | 1,5 |
| P2 | L2 | 1,5 | 2 | 2 | 1,5 | 2 | 2 |
| P3 | L3 | 2,5 | 2,5 | 2 | 2 | 2,5 | 2 |
| P4 | L4 | 3 | 3 | 2,5 | 3 | 2,5 | 2 |
| P5 | L5 | 3 | 3 | 3 | 2,5 | 3 | 3 |
| V-P6 | V-L6 | 2 | 2,5 | 2,5 | 3 | 2 | 2 |
| V-P7 | V-L7 | 2.5 | 2 | 2,5 | 3,5 | 1,5 | 2 |
| V-P8 | V-L8 | 2,5 | 3 | 3,5 | 4 | 2,5 | 2,5 |

Anmerkungen:
Die Bewertung erfolgte nach einem Notensystem von 1 (sehr gut) bis 5 (mangelhaft).

Es zeigt sich, dass die erfindungsgemäßen Stoffe sehr gut zum Gerben bzw. in der Nachgerbung von Leder eingesetzt werden können. Hinsichtlich der Intensität der Färbung ergeben sich sogar Vorteile im Vergleich zu den gebräuchlichen Formaldehydbasierten Gerbstoffen und speziell auch im Vergleich zur ebenfalls Formaldehyd-freien Polyacrylsäure.

### III. Herstellung eines Fettlickers

In einem Rührgefäß wurden 2,3 g eines Polyisobutens (Mₙ: 1000 g/mol) mit 300 g n-C₁₈H₃₇O(CH₂CH₂O)₂₅H, 400 g Ölsäure und 2,3 kg sulfitiertes, oxidiertes Triolein gemischt und auf 60°C erwärmt. Danach gab man 4,7 I Wasser und 100 g n-C₁₈H₃₇O(CH₂CH₂O)₇H zu. Die entstandene Emulsion wurde durch einen Spalthomogenisator geleitet und auf Zimmertemperatur abgekühlt. Man erhielt Fettlicker FL-1.

## Patentansprüche

1. Verfahren zur Herstellung von Leder unter Verwendung von Produkten, erhältlich durch Umsetzung von
(A) mindestens einem cyclischen organischen Carbonat mit
(B) mindestens einer Verbindung mit mindestens zwei nucleophilen Gruppen pro Molekül, gewählt aus Sulfonsäure-, Hydroxyl-, primären oder sekundären Amino- oder Mercaptogruppen.

2. Verfahren nach Anspruch 1, **dadurch gekennzeichnet, dass** man cyclisches organisches Carbonat (A) wählt aus Verbindungen der allgemeinen Formel I 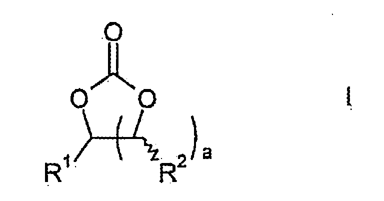 wobei die Variablen wie folgt definiert sind:
R¹ gewählt aus Wasserstoff und C₁-C₄-Alkyl, linear oder verzweigt,
R² gleich oder verschieden und unabhängig voneinander gewählt aus Wasserstoff und C₁-C₄-Alkyl, linear oder verzweigt,
a eine ganze Zahl im Bereich von 1 bis 3.

3. Verfahren nach Anspruch 1 oder 2, **dadurch gekennzeichnet, dass** man Verbindungen (B) wählt aus
(B1) Harnstoff,
(B2) heterocyclischen Verbindungen mit mindestens zwei NH2-Gruppen pro Molekül,
(B3) Dicyandiamid,
(B4) Guanidin,
(B5) 4,4'-Dihydroxydiphenylsulfon,
(B6) Bisphenol A,
(B7) 4-Hydroxyphenylsulfonsäure,
(B8) Amidosulfonsäure.

4. Verfahren nach einem der Ansprüche 1 bis 3, **dadurch gekennzeichnet, dass** man cyclisches organisches Carbonat (A) mit Verbindung (B) in einem Molverhältnis im Bereich von 2 : 1 bis 100 : 1 umsetzt.

5. Verfahren nach einem der Ansprüche 1 bis 4, **dadurch gekennzeichnet, dass** man es als Gerbverfahren oder als Nachgerbverfahren ausübt.

6. Leder, hergestellt nach einem Verfahren nach einem der Ansprüche 1 bis 5.

7. Wässrige Formulierung, enthaltend mindestens ein Produkt, das erhältlich ist durch Umsetzung von
(A) mindestens einem cyclischen organischen Carbonat mit
(B) mindestens einer Verbindung, gewählt aus Harnstoffen, unsubstituiert oder ein- oder zweifach N,N'-substitdiert mit C₁-C₄- Alkyl, Biuret, heterocyclischen Verbindungen mit mindestens zwei NH₂-Gruppen pro Molekül, Benzoguanamin, Dicyandiamid oder Guanidin, in einem Molverhältnis im Bereich von 2 : 1 bis 100 : 1.

8. Wässrige Formulierung nach Anspruch 7, wobei Verbindung (B) gewählt wird aus unsubstituiertem Harnstoff und Melamin.

9. Verwendung von Produkten, die erhältlich sind durch Umsetzung von
(A) mindestens einem cyclischen organischen Carbonat mit
(B) mindestens einer Verbindung,
gewählt aus Harnstoffen, unsubstituiert oder ein- oder zweifach N,N'- substituiert mit C₁-C₄- Alkyl, Biuret, heterocyclischen Verbindungen mit mindestens zwei NH₂-Gruppen pro Molekül, Benzoguanamin, Dicyandiamid oder Guanidin,
in einem Molverhältnis im Bereich von 2:1 bis 100 : 1, zur Herstellung von Leder.

10. Verwendung von wässrigen Formulierungen nach Anspruch 7 oder 8 zur Herstellung von Leder.

## Claims

1. A process for the production of leather using products obtainable by reacting
(A) at least one cyclic organic carbonate with
(B) at least one compound having at least two nucleophilic groups per molecule, selected from sulfo, hydroxyl, primary or secondary amino or mercapto groups.

2. The process according to claim 1, wherein cyclic organic carbonate (A) is selected from compounds of the general formula I 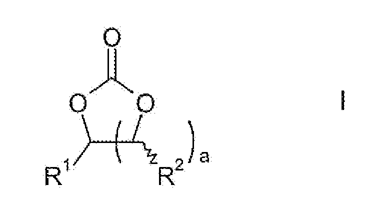 the variables being defined as follows:
R¹ is selected from hydrogen and C₁-C₄-alkyl, linear or branched,
R² are identical or different and, independently of one another, are selected from hydrogen and C₁-C₄-alkyl, linear or branched,
a is an integer in the range from 1 to 3.

3. The process according to claim 1 or 2, wherein compounds (B) are selected from
(B1) urea,
(B2) heterocyclic compounds having at least two NH₂ groups per molecule,
(B3) dicyandiamide,
(B4) guanidine,
(B5) 4,4'-dihydroxydiphenyl sulfone,
(B6) bisphenol A,
(B7) 4-hydroxyphenylsulfonic acid,
(B8) amidosulfonic acid.

4. The process according to any of claims 1 to 3, wherein cyclic organic carbonate (A) is reacted with compound (B) in a molar ratio in the range of from 2:1 to 100:1.

5. The process according to any of claims 1 to 4, which is carried out as a tanning process or as a retanning process.

6. A leather produced by a process according to any of claims 1 to 5.

7. An aqueous formulation comprising at least one produce which is obtainable by reacting
(A) at least one cyclic organic carbonate with
(B) at least one compound selected from ureas, unsubstituted or mono- or di-N,N'-substituted by C₁-C₄-alkyl, biuret, heterocyclic compounds having at least two NH₂ groups per molecule, benzoguanamine, dicyandiamide or guanidine, in a molar ratio in the range of from 2:1 to 100:1.

8. The aqueous formulation according to claim 7, compound (B) being selected from unsubstituted urea and melamine.

9. The use of products which are obtainable by reacting
(A) at least one cyclic organic carbonate with
(B) at least one compound selected from ureas, unsubstituted or mono- or di-N,N'-substituted by C₁-C₄-alkyl, biuret, heterocyclic compounds having at least two NH₂ groups per molecule, benzoguanamine, dicyandiamide or guanidine, in a molar ratio in the range of from 2:1 to 100:1,
for the production of leather.

10. The use of an aqueous formulation according to claim 7 or 8 for the production of leather.

## Revendications

1. Procédé de fabrication de cuir utilisant des produits qui peuvent être obtenus par réaction de
(A) au moins un carbonate organique cyclique avec
(B) au moins un composé qui comporte au moins deux groupes nucléophiles par molécule, choisis parmi les groupes acide sulfonique, hydroxyde, amino primaire ou secondaire ou mercapto.

2. Procédé selon la revendication 1, **caractérisé en ce que** le carbonate organique cyclique (A) est choisi parmi les composés de formule générale I 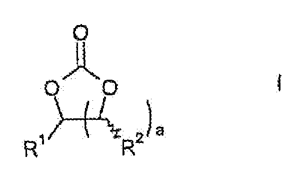 dans laquelle les variables sont définies de la manière suivante :
R¹ choisi parmi l'hydrogène et un alkyle en C₁ à C₄, linéaire ou ramifié,
R² identiques ou différents et choisis indépendamment les uns des autres parmi l'hydrogène et un alkyle en C₁ à C₄, linéaire ou ramifié
a un nombre entier dans la plage allant de 1 à 3.

3. Procédé selon la revendication 1 ou 2, **caractérisé en ce que** les composés (B) sont choisis parmi
(B1) l'urée,
(B2) les composés hétérocycliques qui comportent au moins deux groupes NH₂ par molécule,
(B3) le dicyanodiamide,
(B4) la guanidine,
(B5) la 4,4'-dihydroxydiphénylsulfone,
(B6) le bisphénol A,
(B7) l'acide 4-hydroxyphénylsulfonique,
(B8) l'acide amidosulfonique.

4. Procédé selon l'une quelconque des revendications 1 à 3, **caractérisé en ce que** le carbonate organique cyclique (A) est mis en réaction avec le composé (B) en un rapport molaire dans la plage allant de 2:1 à 100:1.

5. Procédé selon l'une quelconque des revendications 1 à 4, **caractérisé en ce qu'**il est réalisé en tant que procédé de tannage ou en tant que procédé de post-tannage.

6. Cuir, fabriqué selon un procédé selon l'une quelconque des revendications 1 à 5.

7. Formulation aqueuse, contenant au moins un produit, qui peut être obtenu par réaction de
(A) au moins un carbonate organique cyclique avec
(B) au moins un composé choisi parmi les urées, non substituées ou N,N'-substituées une ou deux fois avec un alkyle en C₁ à C₄, le biuret, les composés hétérocycliques qui comportent au moins deux groupes NH₂ par molécule, la benzoguanamine, le dicyanodiamide ou la guanidine,
en un rapport molaire dans la plage allant de 2:1 à 100:1.

8. Formulation aqueuse selon la revendication 7, dans laquelle le composé (B) est choisi parmi l'urée non substituée et la mélanine.

9. Utilisation de produits, qui peuvent être obtenus par réaction de
(A) au moins un carbonate organique cyclique avec
(B) au moins un composé
choisi parmi les urées, non substituées ou N, N' substituées une ou deux fois avec un alkyle en C₁ à C₄, le biuret, les composés hétérocycliques qui comportent au moins deux groupes NH₂ par molécule, la benzoguanamine, le dicyanodiamide ou la guanidine,
en un rapport molaire dans la plage alliant de 2:1 à 100:1,
pour la fabrication de cuir.

10. Utilisation de formulations aqueuses selon la revendication 7 ou 8 pour la fabrication de cuir.
